# EUROPEAN PATENT SPECIFICATION

(11) **EP 2 871 730 B1**
(45) Date of publication and mention of the grant of the patent: **01.09.2021**
(21) Application number: 13813175.0
(22) Date of filing: 03.07.2013
(51) Int. Cl.: H02B 1/04, H02J 3/14, H02J 13/00, G01R 21/00, H05K 7/00

(54) **DISTRIBUTION BOARD SYSTEM**
VERTEILERSYSTEM
SYSTÈME DE TABLEAU DE DISTRIBUTION

(30) Priority: 04.07.2012 JP 2012150708
(43) Date of publication of application: 13.05.2015
(73) Proprietor: Panasonic Intellectual Property Management Co., Ltd., Osaka-shi, Osaka 540-6207 (JP)
(72) Inventor: FURUYA, Tomohide, Osaka-shi, Osaka 540-6207 (JP); MAEDA, Mitsuru, Osaka-shi, Osaka 540-6207 (JP); TAKENAGA, Hideki, Osaka-shi, Osaka 540-6207 (JP); SASAKI, Takayuki, Osaka-shi, Osaka 540-6207 (JP); MIZUTA, Tomoaki, Osaka-shi, Osaka 540-6207 (JP); SUZUKI, Junichi, Osaka-shi, Osaka 540-6207 (JP); AO, Naoki, Osaka-shi, Osaka 540-6207 (JP); KASAYA, Masato, Osaka-shi, Osaka 540-6207 (JP)
(74) Representative: Appelt, Christian W.
(86) International application number: PCT/JP2013/004140
(87) International publication number: WO 2014/006900

(56) References cited:
- WO-A1-2010/048993
- JP-A- 2000 115 921
- JP-A- 2005 094 930
- JP-A- 2006 087 167
- JP-A- 2008 048 469
- JP-A- 2009 130 984
- JP-A- 2009 131 008
- JP-A- 2011 130 649
- JP-A- 2011 142 753
- US-A1- 2006 052 905
- US-A1- 2011 112 704
- None

## Description

### Technical Field

The present invention relates to a distribution board system.

### Background Art

Heretofore, home electric apparatus control systems have been proposed in which a controller controls operations of electric apparatuses so as to reduce power consumption in a power reduction time slot in which power consumed by the electric apparatuses installed in the customer's facility needs to be reduced (refer to JP 2011-142753 A (hereinafter referred to as "Document 1"), for example). A communication line for connecting to an external network is connected to the controller, and the controller acquires information on the power reduction time slot from a management server via the external network. The controller controls the operations of the electric apparatuses via the internal network based on the acquired information on the power reduction time slot, and reduces the power consumption.

In the home electric apparatus control system disclosed in the above Document 1, since the controller is installed outside the distribution board, tasks such as installing the controller and connecting the communication line to the controller are needed in addition to the task of installing the distribution board, thus requiring time and effort for installation.

WO 2010/048993 A1 describes an electricity meter for installation in or at a building and for measuring the consumption of energy supplied to a customer that comprises power measuring means for obtaining a measure of power delivered to an electric circuit; means for obtaining an amount of electric energy supplied to the electric circuit; monitoring means for monitoring whether or not the measure of power delivered to the electric circuit complies with a specified limit; command generating means for generating a disconnection command in response to the measure of power exceeding the specified limit; and transmitter means for transmitting said disconnection command via power line communication over said electric circuit connected to said power output to at least one remote controllable disconnector module arranged in the electric circuit. It also discloses that the remote controllable disconnector modules can be embodied as rack mountable devices to be mounted in a rack.

JP 2005 094930 A describes that the current of a circuit breaker is detected, and soft switches provided in Internet-connected home appliances are utilized. A master circuit breaker or a branch circuit breaker is not instantly operated under an overload of several tens of percent for a certain period of time, resulting from the use of a dryer or a microwave oven. A signal is transmitted from a current control device to stop a preselected individual device such as an air conditioner. After confirming by detecting that the current of the circuit breaker is completed and a time in which the cause of the overload is expected to vanish has passed, the stopped individual device is restarted.

US 2006/052905 A1 describes a power control assembly for use in an integrated power control system that has a base with a housing that defines a cavity adapted for receiving a power switch. The control assembly includes a control module configured for generating control signals for controlling the power switch for selectively providing power to a load. A control housing houses the control module and is adapted to be releasably coupled to the base housing and is configured for electrically coupling to control couplers on the base housing for providing the generated control signals to the power switch within the housing cavity upon coupling the control housing to the base housing.

US 2011/112704 A1 describes an electrical power management system includes a power intervening panel having a low voltage power supply having a low voltage output electrically coupled to a low voltage circuit, a low voltage common and a power load input, a power module array having a plurality of power contactor modules wherein each of the plurality of power contactor modules has a power contactor with a power load input and a power load output switchable between a closed and an open position and a low voltage switch operably connected to the power contactor for switching the power contactor between the closed and the open position,; a low voltage signal relay module having a plurality of signal couplings wherein a primary coupling is a low voltage signal output connected to the low voltage power supply for transmitting a low voltage output signal to one of a direct digital controller and a digital timer and wherein a secondary coupling is a low voltage signal input for receiving the low voltage output signal from one of the direct digital controller and the digital timer, the secondary coupling being electrically coupled to the low voltage switch of one of the plurality of power contactor modules, and an enclosure containing the low voltage power supply, the power module array and the low voltage signal relay module.

JP 2009 131008 A describes a distribution board that has a cabinet for housing: a trunk breaker; a plurality of branch breakers; current sensors for branch which measure a current value to be supplied to a trunk power path via the trunk breaker; a current sensor for branch which measures, for each branch breaker, a current value to be supplied to electric appliances via the branch breakers; a display unit having a plurality of display lamps for trunk displaying the conduction state of the trunk breaker and display lamps for branch for displaying the conduction state of each of the branch breakers; and a measurement control unit for controlling the display unit; The measurement unit sets combinations of lighting-up states of the plurality of display lamps at combinations associated with the size of the current value of the trunk breaker which has been obtained by the current sensor for trunk.

### Disclosure of Invention

The present invention relates to a distribution board system as defined in independent claim 1 and has been made in view of the above-described problems. An object of the present invention is to provide a distribution board system requiring little time and effort for installation. Preferred embodiments are described in dependent claims 2 to 11.

A distribution board system according to the present invention includes a distribution board. The distribution board is configured to distribute electric power supplied from an electric power provider to branch circuits, and supply electric power to apparatuses connected to the branch circuits. The distribution board includes one or more housing boxes. The one or more housing boxes are configured to house two or more types of internal units including a trunk switch to which a trunk wiring from the electric power provider is connected, and branch switches to which the branch circuits are connected. A communication unit and a function unit are housed in the one or more housing boxes. The communication unit is configured to communicate with a power meter having a communication function. The function unit is configured to perform control regarding power supply to an apparatus based on a communication content with the power meter are housed in the one or more housing boxes.

In the distribution board system, the communication unit and the function unit each preferably include a mounting mechanism for detachably mounting the unit to a mounting portion.

In the distribution board system, a housing space for housing the branch switches is preferably secured inside the one or more housing boxes. The function unit is preferably housed inside the one or more housing boxes using the housing space.

The distribution board system preferably includes the following configuration. A wiring member that constitutes a communication path between the communication unit and the function unit is installed in advance inside the one or more housing boxes. The communication unit and the function unit each include a communication section and a connection terminal. The communication section is configured to perform communication between the communication unit and the function unit. The connection terminal is for electrically connecting the communication section to the wiring member. When the communication unit or the function unit is housed inside the one or more housing boxes, the connection terminal is electrically connected to the wiring member.

In the distribution board system, a power supply unit is preferably configured to supply electric power corresponding to an input power supply specification of the function unit to the function unit is housed in the one or more housing boxes.

The distribution board system preferably includes, as the function unit, a measurement unit. The measurement unit is preferably configured to measure power consumption in each of the branch circuits and a control unit configured to control the apparatus based on a measurement result by the measurement unit. The measurement unit and the control unit are preferably configured to communicate via a wired communication line.

The distribution board system preferably includes the following configuration. The one or more housing boxes include a distribution board body and an expansion board provided side by side with the distribution board body. A housing space for housing the branch switches is secured inside the distribution board body. At least one function unit of function units is housed in the distribution board body. The communication unit and a remaining function unit are housed in the expansion board. The communication unit and the at least one function unit housed in the distribution board body are configured to communicate via a wired communication line. The function unit to be housed in the distribution board body is housed inside the distribution board body using the housing space provided inside the distribution board body.

The distribution board system preferably includes the following configuration. The one or more housing boxes include a box body and a lid body. The box body has an opening in a front surface. The lid body is configured to openably/closably cover the opening. A housing space for housing the branch switches is secured inside the box body. The communication unit is installed in the lid body. At least one function unit of function units is housed in the box body. The communication unit and the at least one function unit housed in the box body communicate via a wired communication line. The at least one function unit to be housed in the box body is housed inside the box body using the housing space provided inside the box body.

In the distribution board system, the at least one function unit to be housed in the housing space preferably includes a function of a branch switch configured to turn on/off power supply to a branch circuit connected to the function unit.

The distribution board system preferably includes the following configuration. The distribution board system includes, as the function unit, a control unit configured to control the apparatus. The power meter includes: a current detection function of detecting a value of working current; a limiter function of cutting off power supply to a customer's facility side when the value of working current exceeds a predetermined current limit value; and a reporting function of transmitting current power consumption and a power limit value to the communication unit, when the value of working current exceeds a predetermined current threshold that is lower than the current limit value. The communication unit is configured to output, upon receiving the current power consumption and the power limit value that have been transmitted by the reporting function of the power meter, the received current power consumption and power limit value to the control unit.

The distribution board system preferably includes the following configuration. The power meter includes: a current detection function of detecting a value of working current; a limiter function of cutting off power supply to a customer's facility side when the value of working current exceeds a predetermined current limit value; and a reporting function of transmitting current power consumption and a power limit value to the communication unit, when the value of working current exceeds a predetermined current threshold value that is lower than the current limit value. The communication unit is configured to control, upon receiving the current power consumption and the power limit value that have been transmitted by the reporting function of the power meter, a relay unit provided in a predetermined branch circuit of the branch circuits so as to cut off power supply to the apparatus connected to the branch circuit.

The distribution board system preferably includes the following configuration. The power meter includes: a current detection function of detecting a value of working current; a limiter function of cutting off power supply to a customer's facility side when the value of working current exceeds a predetermined current limit value; and a reporting function of transmitting current power consumption and a power limit value to the communication unit, when the value of working current exceeds a predetermined current threshold value that is lower than the current limit value. The communication unit is configured to control, upon receiving the current power consumption and the power limit value that have been transmitted by the reporting function of the power meter, the trunk switch so as to open the trunk switch.

The distribution board system preferably includes the following configuration. The distribution board system includes, as the function unit, a control unit and a current detection unit. The control unit is configured to control the apparatus. The current detection unit is configured to measure a value of working current in total. The power meter includes a limiter function of cutting off power supply to a customer's facility side when the value of working current in total exceeds a current limit value. The communication unit is configured to output a power limit value and current power consumption that is obtained from the value of working current to the control unit, when the value of working current inputted from the current detection unit exceeds a predetermined current threshold value that is lower than the current limit value.

The distribution board system preferably includes the following configuration. The distribution board system includes, as the function unit, a current detection unit. The current detection is configured to measure a value of working current in total. The power meter includes a limiter function of cutting off power supply to a customer's facility side when the value of working current in total exceeds a current limit value. The communication unit is configured to control a relay unit provided in a predetermined branch circuit of the branch circuits so as to cut-off power supply to the apparatus connected to the branch circuit, when the value of working current inputted from the current detection unit exceeds a predetermined current threshold that is lower than the current limit value.

The distribution board system preferably includes the following configuration. The distribution board system includes, as the function unit, a current detection unit. The current detection is configured to measure a value of working current in total. The power meter includes a limiter function of cutting-off power supply to a customer's facility side when a value of working current in total exceeds a current limit value. The communication unit is configured to control the trunk switch so as to open the trunk switch, when the value of working current inputted from the current detection unit exceeds a predetermined current threshold value that is lower than the current limit value.

The distribution board system preferably includes the following configuration. The distribution board system includes, as the function unit, a control unit and a current detection. The control unit is configured to control the apparatus. The current detection unit is configured to measure a value of working current in total. The power meter includes a limiter function of cutting-off power supply to a customer's facility side when the value of working current in total exceeds a current limit value. The communication unit is configured to output the power limit value and current power consumption that is obtained from the value of working current to the control unit, when the value of working current inputted from the current detection unit exceeds a predetermined current threshold value that is lower than the current limit value. The control unit is configured to report to a predetermined communication terminal connected to a public network that the power consumption has exceeded a power threshold value.

In the distribution board system, the function unit preferably includes a control unit configured to control the apparatus. The communication unit preferably includes a function of the control unit.

The distribution board system preferably includes the following configuration. The function unit includes a control unit configured to control the apparatus. The communication unit includes a first communication section, a second communication section, and a function of the control unit. The first communication section is configured to perform power line communication with the power meter. The second communication section is configured to perform wireless communication with a terminal apparatus conforming to a wireless LAN standard. The communication unit is configured to wirelessly transmit information received from the power meter by the first communication section to the terminal apparatus from the second communication section.

The distribution board system preferably includes the following configuration. The distribution board system includes, as the function unit, a control unit. The control unit is connected to the communication unit and is configured to control the apparatus based on information inputted from the communication unit. The control unit includes a wireless communication section configured to wirelessly transmit a control signal to the apparatus. Two or more types of control units using different wireless communication systems are connectable to the communication unit.

The distribution board system preferably includes the following configuration. The distribution board system includes a control unit and an outlet. The control unit is, as the function unit, configured to control the apparatus. The outlet is to be connected to one of the branch circuits. The power meter includes: a limiter function of cutting-off power supply to a customer's facility side when the power consumption exceeds a predetermined power limit value; and a reporting function of transmitting current power consumption and the power limit value to the communication unit. The outlet is provided with a display part configured to display an indication of usable power. The control unit is configured to transmit, to the outlet, a usable power value determined based on current power consumption and the power limit value that are received from the power meter by the communication unit. The outlet is configured to display the indication of usable power on the display part.

The distribution board system preferably includes the following configuration. The distribution board system includes a control unit and an adapter. The control unit is, as the function unit, configured to control the apparatus. The adapter includes a plug blade to be connected to an outlet that is connected to one of the branch circuits and a blade receiving member to which a plug blade of the other apparatus is to be connected, and supplies electric power that is supplied from the outlet to the other apparatus. The power meter includes: a limiter function of cutting off power supply to a customer's facility side, when the power consumption exceeds a predetermined power limit value; and a reporting function of transmitting current power consumption and the power limit value to the communication unit. The adapter is provided with a display part configured to display an indication of usable power. The control unit is configured to transmit to the adapter a usable power value determined based on current power consumption and the power limit value that are received by the communication unit from the power meter. The adapter is configured to display the indication of usable power on the display part.

The distribution board system includes the following configuration. The distribution board system includes a control unit and an outlet. The control unit is, as the function unit, configured to control the apparatus. The outlet is to be connected to one of the branch circuits. The power meter includes: a limiter function of cutting off power supply to a customer's facility side, when the power consumption exceeds a predetermined power limit value; and a reporting function of transmitting current power consumption and the power limit value to the communication unit. The outlet includes: an information acquiring section and a power supply control section. The information acquiring section is configured to acquire information on power consumption from the apparatus. The power supply control section is configured to control a status of power supply to the apparatus. The control unit is configured to transmit, to the outlet, a usable power value determined based on current power consumption and the power limit value that are received by the communication unit from the power meter. The power supply control section is configured to compare the information on power consumption acquired by the information acquiring section from the apparatus with information on the usable power value, the control unit being configured not to supply power to the apparatus if the power consumption of the apparatus is larger than the usable power value.

In the distribution board system, the communication unit is preferably configured to communicate with the power meter using the power line communication system.

In the distribution board system, an operation setting is preferably performed on the communication unit according to operation setting information received from the power meter.

According to the distribution board system according to the present invention, control of apparatuses based on a measurement value of power consumption can be performed by simply installing the housing box of the distribution board and installing the communication unit and the function unit therein. A distribution board system can thereby be realized that requires little time and effort for installation.

### Brief Description of Drawings

Preferred embodiments of the present invention will now be described in further details. Other features and advantages of the present invention will become better understood with regard to the following detailed description and accompanying drawings where:
FIG. 1 is a system configuration diagram illustrating an overall configuration of a distribution board system according to the present embodiment;
FIG. 2 is a system configuration diagram illustrating an overall configuration of another mode of the distribution board system according to the present embodiment;
FIG. 3 is an explanatory diagram schematically illustrating the distribution board according to the present embodiment;
FIG. 4 is a perspective view schematically illustrating the distribution board according to the present embodiment;
FIG. 5 is an explanatory diagram illustrating a communication unit according to the present embodiment;
FIG. 6 is a system configuration diagram illustrating an overall configuration of another mode of the distribution board system according to the present embodiment;
FIG. 7 is a system configuration diagram illustrating an overall configuration of yet another mode of the distribution board system according to the present embodiment; and
FIG. 8 is a system configuration diagram illustrating an overall configuration of still yet another mode of the distribution board system according to the present embodiment.

### Description of Embodiments

Hereinafter, an embodiment according to the present invention will be described with reference to the diagrams.

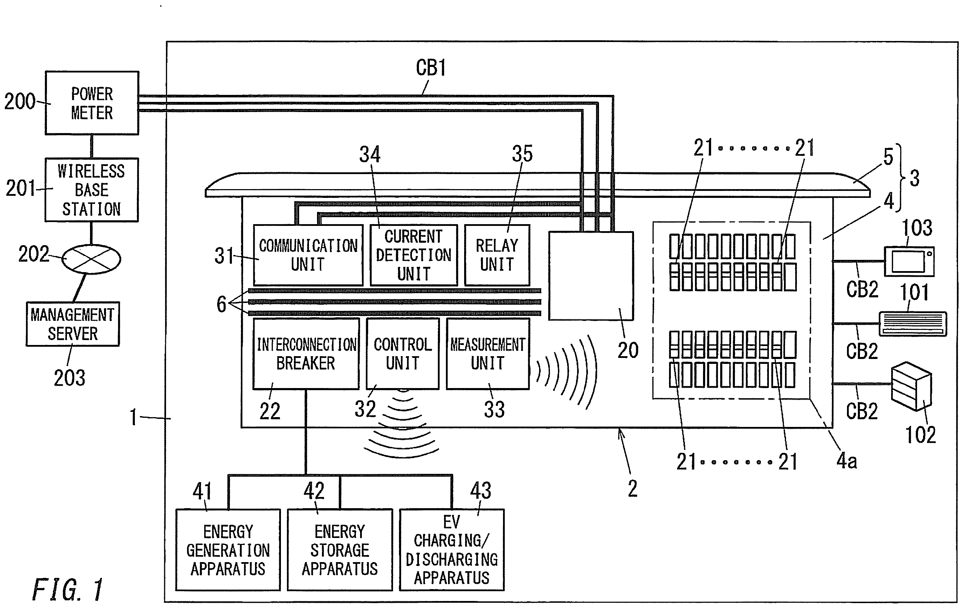

FIG. 1 is a diagram illustrating an overall system configuration. A distribution board 2 is installed in a dwelling unit 1 of an electric power customer, and a trunk wiring CB1 from an electric power provider that is drawn into the dwelling unit 1 is connected to the distribution board 2.

A power meter 200 is installed in the trunk wiring CB1 at a position before being drawn into the dwelling unit 1. The power meter 200 is of a type that is referred to as a smart meter, and includes a communication function of performing wireless communication with a wireless base station 201 installed by the electric power provider and a communication function of communicating with a communication unit 31 installed in the distribution board 2 using a power line communication system. The power meter 200 measures power consumed in the dwelling unit 1 and wirelessly transmits a power consumption amount that is measured in units of a predetermined time period to the wireless base station 201. The wireless base station 201 and a management server 203 operated by the electric power provider are connected to a communication network 202. Data on the power consumption amount that is transmitted from the power meter 200 to the wireless base station 201 is transmitted to the management server 203 via the communication network 202, and the power consumption amount of each dwelling unit 1 is managed by the management server 203. Also, a limit value of the power consumption (hereinafter referred to as "power limit value") is set to the power meter 200 according to a contractual coverage between the electric power customer and the electric power provider. The power meter 200 continuously monitors the measurement value of the power consumption and compares the measurement value with the power limit value, and cuts off the power supply to the dwelling unit 1 when the measurement value of the power consumption (that is, working current) exceeds the power limit value, and thus also has a function of an electronic limiter. Note that although only one dwelling unit 1 is shown in FIG. 1, two or more dwelling units exist in practice, and the distribution board system of the present invention is installed in each of the dwelling units. Note that the dwelling unit 1 may be an independent house or may be a housing complex in which two or more customers reside.

Next, the distribution board system installed in the dwelling unit 1 will be described. The distribution board 2 includes a distribution board body 3 made of a synthetic resin, and various internal units are housed in the distribution board body 3. The distribution board body 3 is constituted by a box body 4 and a lid body 5. The box body 4 is shaped like a rectangular parallelepiped in which the thickness dimension is smaller than the horizontal and the vertical dimensions, has an open front face, and houses two or more internal units therein. The lid body 5 is rotatably attached to an upper front edge of the box body 4, and openably/closably covers the opening of the box body 4. That is, the lid body 5 is rotatably attached to a side such that the side of the opening periphery of the box body 4 is the rotation axis. Herein, a housing box (housing portion) that houses an internal unit regarding power supply to an apparatus is configured by the distribution board body 3.

A trunk switch 20, two or more branch switches 21, an interconnection breaker 22, a communication unit 31, a control unit 32, an electric power measurement unit (hereinafter referred to as "measurement unit") 33, a current detection unit 34, a relay unit 35, and the like are housed inside the distribution board body 3 (that is, box body 4) as internal units.

The trunk wiring CB1 from the electric power provider is connected to a primary side of the trunk switch 20, and the two or more branch switches 21 are connected to a secondary side of the trunk switch 20.

A branch wiring CB2 that is wired inside the dwelling unit 1 is connected to a secondary side of the branch switch 21, and electric power is supplied to electric apparatuses such as an air-conditioner 101, a dishwasher 102, and a monitor device 103 that are connected to the branch wiring CB2. The air-conditioner 101, the dishwasher 102, and the monitor device 103 that are shown in the diagram include a wireless communication function, and a HEMS (Home Energy Management System) network is configured by these electric apparatuses having the wireless communication function and a later-described control unit 32.

The branch switch 21 is installed inside the box body 4 using a branch breaker mounting base (not shown) such as disclosed in JP 2012-16092 A. The branch breaker mounting base is mounted inside the box body 4. A conductive bar is arranged at the center of the branch breaker mounting base in the vertical direction. When the branch switch 21 is inserted and connected to the conductive bar from above or below, the branch switch 21 is electrically connected to the conductive bar and is mechanically held with respect to the branch breaker mounting base. Note that a description of the mounting mechanism will be omitted, since the mounting mechanism for electrically connecting the branch switch 21 to the conductive bar and mechanically holding the branch switch 21 with respect to the branch breaker mounting base is disclosed in JP 2012-16092 A.

An energy generation apparatus 41, an energy storage apparatus 42, and an EV charging/discharging apparatus 43 are connected to the interconnection breaker 22. The interconnection breaker 22 interconnects these apparatuses to the commercial power supply system, or disconnects them from the commercial power supply system. The energy generation apparatus 41 is an apparatus that generates energy by itself. The energy storage apparatus 42 is an apparatus that stores energy and discharges energy as necessary. Note that the energy generation apparatus 41 includes a solar power generation system, a fuel cell system, or the like. The energy storage apparatus 42 includes an electric storage system using a lithium-ion battery or a NAS battery. Also, the EV charging/discharging apparatus 43 is used for charging an electric vehicle such as a battery-driven electric vehicle or a plug-in hybrid vehicle and for utilizing electric power discharged from the electric vehicle on the dwelling unit 1 side.

The communication unit 31 is connected to the trunk wiring CB1 on the primary side of the trunk switch 20, and communicates with the power meter 200 via the trunk wiring CB1 using the power line communication system, for example. Also, the communication unit 31 is connected to function units (such as the control unit 32, the measurement unit 33, the current detection unit 34, the relay unit 35, and the interconnection breaker 22) via a wired communication line (not shown), and performs wired communication with each of these function units. For example, the communication unit 31 transmits information that is received from the power meter 200 to the control unit 32 via the communication line. Note that the communication unit 31 may be connected to the secondary side of the trunk switch 20.

The control unit 32 includes a wireless communication function of performing wireless communication with electric apparatuses having a wireless communication function such as the air-conditioner 101, the dishwasher 102, and the monitor device 103. The control unit 32, upon receiving information from the power meter 200 via the communication unit 31, controls the operations of apparatuses by transmitting control signals wirelessly to the apparatuses having the wireless communication function, or controls the later-described relay unit 35 based on the information. Accordingly, the control unit 32 can perform control regarding the power supply to the apparatuses based on the contents of communication with the power meter 200. Herein, a function unit that performs control regarding the power supply to the apparatuses based on the communication contents with the power meter 200 is configured by the control unit 32 and the like.

The measurement unit 33 measures current flowing through each branch wiring CB2 by a current sensor (not shown) provided in each branch circuit, that is, each branch wiring CB2, measures power consumption for each branch wiring CB2, and wirelessly transmit the measurement result to the control unit 32. Note that the control unit 32 and the measurement unit 33 perform wireless communication using a 900 MHz band specific small power radio system, for example.

The current detection unit 34 is used to detect a value of current flowing though the trunk switch 20, for example.

The relay unit 35, by opening a relay contact connected to a desired branch wiring CB2 under the control of the control unit 32, cuts off power supply to an electric apparatus connected to the desired branch wiring CB2.

As described above, the distribution board system according to the present embodiment includes the distribution board 2 that distributes power supplied from the electric power provider to the branch circuits, and supplies electric power to the apparatuses (the electric apparatuses such as the air-conditioner 101, the dishwasher 102, and the monitor device 103, for example) that are connected to the branch circuits. The distribution board 2 includes the housing box (constituted by one distribution board body 3 according to the present embodiment) that houses two or more types of internal units including the trunk switch 20 to which the trunk wiring CB1 from the electric power provider is connected and the branch switches 21 to which the branch circuits are connected. The housing box (distribution board body 3) houses the communication unit 31 that performs communication with the power meter 200 having a communication function, and the function unit (constituted by the control unit 32 or the like) that performs control regarding the power supply to the apparatuses based on the contents of communication with the power meter 200.

As described above, with the distribution board system according to the present embodiment, control of apparatuses based on a measurement value of power consumption can be performed simply by installing the housing box (distribution board body 3) of the distribution board 2 and installing the communication unit 31 and the function unit inside the housing box. Accordingly, a distribution board system requiring little time and effort for installation can be realized. Note that the control unit 32, which is a function unit, controls power supply to the electric apparatuses such as the air-conditioner 101 and the dishwasher 102, controls operations of the electric apparatuses, and controls display of the monitor device 103, based on information that the communication unit 31 has received.

Also, three (L1 phase, L2 phase, and N phase) conductive bars 6 that are connected to the secondary side of the trunk switch 20 are provided along the horizontal direction in a left housing space of the box body 4. The interconnection breaker 22, the communication unit 31, the control unit 32, the measurement unit 33, the current detection unit 34, and the relay unit 35, out of the internal units described above, are housed in the left housing space of the box body 4. The interconnection breaker 22, the communication unit 31, the control unit 32, the measurement unit 33, the current detection unit 34, and the relay unit 35 each have a mounting mechanism similar to that of the branch switch 21 described above, and a description of the mounting mechanism will be omitted. The interconnection breaker 22, the communication unit 31, the control unit 32, the measurement unit 33, the current detection unit 34, and the relay unit 35 are connected through insertion to the conductive bars 6 from above or below, and are mounted inside the box body 4.

As described above, the communication unit 31 and the function unit (control unit 32, measurement unit 33, current detection unit 34, relay unit 35, interconnection breaker 22, or the like) each have a mounting mechanism for being detachably mounted to the mounting portion provided on the housing box side. Accordingly, a contractor can perform the task of mounting/demounting the communication unit 31 and the function unit to/from the housing box easily. Also, since the power meter 200 is connected to the trunk wiring CB1 connected to the primary side of the trunk switch 20, and the communication unit 31 is installed inside the distribution board 2, the communication unit 31 can be installed at a position relatively close to the power meter 200. Accordingly, a communication distance between the communication unit 31 and the power meter 200 is shortened, and the reliability of the communication improves. Also, since the measurement unit 33 measures current consumed in each branch circuit using the current sensor provided in each branch circuit, the measurement unit 33 is preferably installed at a position close to the wirings of the branch circuits. As a result of installing the measurement unit 33 inside the box body 4, wirings for connecting the measurement unit 33 and the current sensors provided in respective branch circuits can be arranged inside the distribution board body 3, thus simplifying the wiring work.

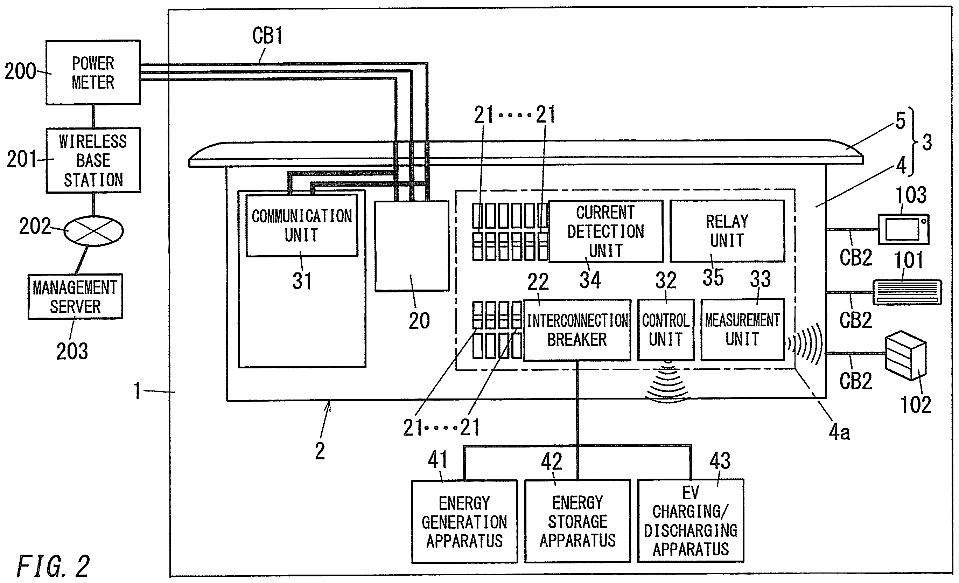

Also, as shown in FIG. 1, a housing space 4a for housing the two or more branch switches 21 is secured inside the box body 4. Here, in a case where the space for housing the aforementioned function units such as the control unit 32 does not exist inside the box body 4 and there is a room in a housing space 4a for the branch switch 21, the function units may be mounted in the housing space 4a, as shown in FIG. 2. In the mode shown in FIG. 2, the communication unit 31 is housed in free space other than the housing space 4a, on the left side to the trunk switch 20 inside the box body 4 viewed from front. Also, the interconnection breaker 22, the control unit 32, the measurement unit 33, the current detection unit 34, and the relay unit 35 are housed, as the function units, in the housing space 4a for the branch switch 21. The interconnection breaker 22, the control unit 32, the measurement unit 33, the current detection unit 34, and the relay unit 35 each include a mounting mechanism similar to that of the branch switch 21 described above, and are mounted to the housing space 4a in a manner similar to that of the branch switch 21.

As described above, in the case where there is no free space for housing the function unit inside the distribution board body 3, and there is a room in the housing space 4a for the branch switch 21, the function units can be housed even in a small distribution board body 3 by housing the function units in the housing space 4a using the housing space 4a for the branch switch.

Also, inside the box body 4, a wiring member (not shown) that constitutes a communication path between the communication unit 31 and the function unit is provided in advance in the housing space in which the communication unit 31 and the function unit are housed, and female connectors (not shown) are provided at portions of the wiring member. On the other hand, the communication unit 31 and the function unit each have a communication section that performs wired communication between the units, and a connection terminal constituted by a male connector (not shown) that is detachably connected to the female connector described above. Accordingly, in a state in which the communication unit 31 and the function unit are housed in the housing space inside the box body 4, the male connectors provided in the communication unit 31 and the function unit are respectively connected to the corresponding female connectors. Then, the communication sections of the communication unit 31 and the function unit are connected to the wiring member via the male connector and the female connector, and wired communication is performed between the communication sections of the units.

As described above, when the communication unit 31 and the function unit are mounted to the box body 4, the communication sections of the communication unit 31 and the function unit are connected to the wiring member. Accordingly, since the task of connecting communication cables to the units in a separate step is not required, time and effort for installation are reduced, and the possibility of a connection error accompanying the wiring work can be reduced. Also, in a case where the units are connected with communication cables, since the communication cables that connect the units are routed inside the box body 4, the internal appearance of the board is impaired. In contrast, since the wiring member constituting the communication path between the communication unit 31 and the function unit is preinstalled inside the box body 4, the wiring member can be installed in an orderly fashion, and the internal appearance of the box body 4 can be improved.

Also, AC power is supplied to the above communication unit 31 and the function unit via the conductive bar 6 (refer to FIG. 1). The communication unit 31 and the function unit each obtain operating power by converting AC to DC with an embedded AC/DC converter and lowering the voltage to a desired voltage value, but electric power appropriate for each unit may be supplied to each unit from a power supply unit (not shown) housed in the box body 4. In this case, since operating power corresponding to an input power supply specification is supplied from the power supply unit to each function unit, the communication unit 31 and the function units need not each include an AC/DC converter, and costs of the communication unit 31 and the function units can be decreased. Also, in a case where the communication unit 31 and the function units each include the AC/DC converter, the loss accompanying an electric power conversion occurs in each AC/DC converter. The loss accompanying the electric power conversion can be reduced by supplying power from the power supply unit to the respective units.

Also, in the present embodiment, although data is transmitted and received between the control unit 32 and the measurement unit 33 using wireless communication, communication may be performed between the control unit 32 and the measurement unit 33 via a wired communication line that connects the control unit 32 and the measurement unit 33. The control unit 32 performs wireless communication with electric apparatuses having a wireless communication function. Accordingly, there is a problem in that, when wireless communication is performed between the control unit 32 and the measurement unit 33, interference occurs in the wireless communication between the control unit 32 and the electric apparatuses, or communication traffic increases. In contrast, possibility of interference occurring in the wireless communication between the control unit 32 and the electric apparatus can be reduced and communication traffic can also be reduced by performing communication via the wired communication line between the control unit 32 and the measurement unit 33.

Note that another method may be adopted as long as the method is capable of preventing interference occurring in the wireless communication between the control unit 32 and the electric apparatuses. For example, a frequency band used in the wireless communication between the control unit 32 and the measurement unit 33 may be different from the frequency band used in the wireless communication between the control unit 32 and the electric apparatuses.

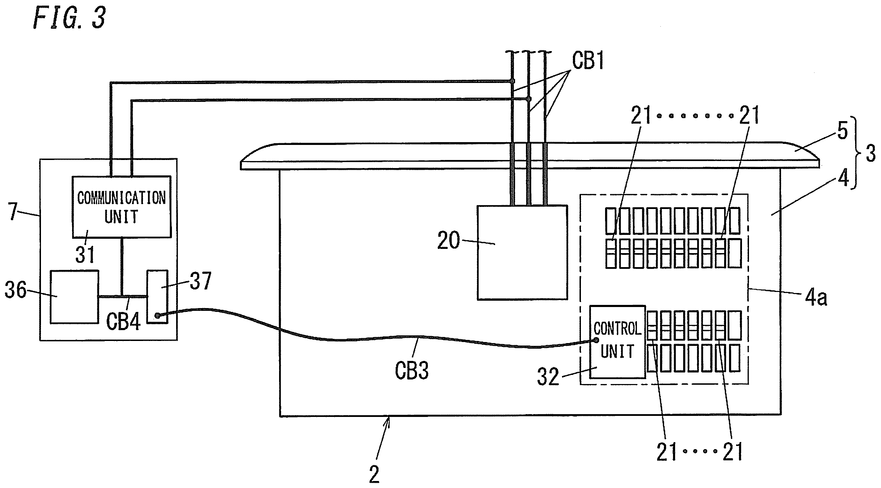

Also, in the present embodiment, although the communication unit 31 and the function units (constituted by the control unit 32, or the like) are housed inside the distribution board body 3, the communication unit 31 and the function units may be housed in an expansion board 7 that is provided alongside the distribution board body 3, as shown in FIG. 3.

In the mode shown in FIG. 3, at least one of the function units (control unit 32, for example) is housed in the distribution board body 3, and the communication unit 31 and the remaining function units 36 are housed in the expansion board 7. Here, a housing box (housing portion) that houses internal units regarding power supply to apparatuses is configured by the distribution board body 3 and the expansion board 7.

The control unit 32, which is a function unit housed in the distribution board body 3, is mounted to the housing space 4a that is secured for the branch switch 21 in advance inside the distribution board body 3. Note that the control unit 32 includes a mounting mechanism similar to that of the branch switch 21, and is mounted to the housing space 4a in a manner similar to that of the branch switch 21.

A relay terminal base 37 is provided inside the expansion board 7, and a communication terminal of the control unit 32 and the relay terminal base 37 are connected via a communication line CB3. Also, a communication terminal of the communication unit 31 and the relay terminal base 37 are connected via a communication line CB4, and communication is performed between the communication unit 31 and the control unit 32 with a wired method via the communication lines CB3 and CB4. Note that the method of communication between the function unit including the control unit 32 and the communication unit 31 is not limited to wired communication, and may be wireless communication.

As described above, the housing box (housing portion) includes the distribution board body 3 and the expansion board 7 provided alongside the distribution board body 3, at least one of the function units (control unit 32) is housed in the distribution board body 3, and the communication unit 31 and the remaining function units 36 are housed in the expansion board 7. The function unit (control unit 32) to be housed in the distribution board body 3 is housed inside the distribution board body 3 using the housing space 4a provided inside the distribution board body 3. The communication unit 31 and the function unit (control unit 32) housed in the distribution board body 3 communicate via the wired communication lines CB3 and CB4. Accordingly, even in a case where there is no free space inside the distribution board body 3 in an existing dwelling unit 1 (refer to FIG. 1) or the like, the communication unit 31 and the function unit can be installed, enabling control based on information received from the power meter 200 (refer to FIG. 1). Also, since the expansion board 7 is provided alongside the distribution board body 3, the communication unit 31 and the function unit can be installed together in the vicinity of the distribution board body 3, and time and effort for installation such as installing wiring can be reduced. Also, since a space for installing the communication unit 31 or the function unit need not be secured in a place separated from the distribution board body 3, additional space is not required in the dwelling unit 1.

To rephrase with reference to FIG. 3, the distribution board system includes, as function units, at least a first function unit (control unit 32 in the diagram) and a second function unit (remaining function units 36 in the diagram) that is different from the first function unit. The first function unit is housed in the distribution board body 3, and the communication unit 31 and the second function unit are housed in the expansion board 7. The communication unit 31 and the first function unit communicate via the wired communication lines CB3 and CB4. Also, the first function unit is housed inside the distribution board body 3 using the housing space 4a provided inside the distribution board body 3.

Also, in the mode in FIG. 3, it is preferable that the control unit 32 (function unit) to be housed in the housing space 4a includes a function of a branch switch that switches power supply to the branch circuit to be connected to the control unit 32. That is, it is preferable that the first function unit includes a function of switching power supply to the branch circuit to be connected to the first function unit.

Accordingly, even in a case where the function unit is housed in the housing space 4a for the branch switch, it is possible to prevent a deficiency in the number of circuits of the branch switch.

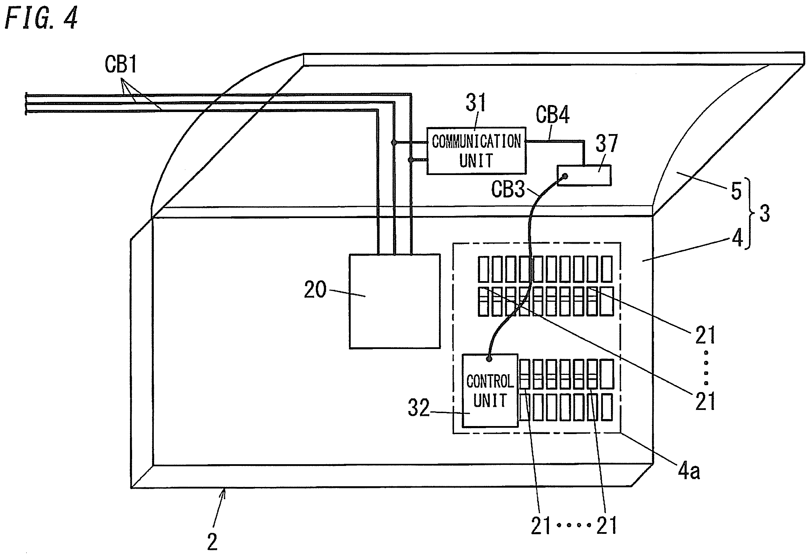

Also, although in the mode in FIG. 3, the communication unit 31 and the function unit are housed in the expansion board 7, the communication unit 31 may be mounted to a back surface of the lid body 5 that constitutes the distribution board body 3, as shown in FIG. 4. Also, in the mode in FIG. 4, the control unit 32, which is a function unit, is mounted in the housing space 4a secured for the branch switch 21 inside the box body 4. Note that the control unit 32 includes a similar mounting mechanism to that of the branch switch 21, and is mounted to the housing space 4a in a similar manner to the branch switch 21. Also, the relay terminal base 37 is mounted to the back surface of the lid body 5, and the communication terminal of the communication unit 31 is connected to the relay terminal base 37 via the communication line CB4. Also, the communication terminal of the control unit 32 is connected to the relay terminal base 37 via the communication line CB3, and wired communication is performed between the communication unit 31 and the control unit 32 via the communication lines CB3 and CB4. Note that the communication method between the function unit including the control unit 32 and the communication unit 31 is not limited to the wired method, and may be a wireless method.

As described above, in the mode in FIG. 4, the communication unit 31 is installed in the lid body 5, and at least one of the function units (control unit 32, for example) is housed in the box body 4. The communication unit 31 installed in the lid body 5 and the function unit (control unit 32) housed in the box body 4 perform communication via the wired communication lines CB3 and CB4. Also, the function unit to be housed in the box body 4 is housed inside the box body 4 using the housing space 4a provided inside the box body 4. Accordingly, even in a case where there is no vacant space inside the distribution board body 3 in an existing dwelling unit 1 (refer to FIG. 1) or the like, installation of the communication unit 31 and the function unit becomes possible, and control based on information received from the power meter 200 (refer to FIG. 1) becomes possible. Note that it is preferable that the lid body 5 is thick and the opening formed at the back surface has a certain depth, so as to enable the communication unit 31 to be mounted.

The mode in FIG. 4 will be described in another way as follows. The distribution board system includes, as the function unit, at least a first function unit (control unit 32 in the diagram). The communication unit 31 is installed in the lid body 5 and the first function unit is housed in the box body 4. The communication unit 31 and the first function unit communicate via the wired communication lines CB3 and CB4. Also, the first function unit is housed inside the box body 4 using the housing space 4a provided inside the box body 4.

Also, in the mode in FIG. 4, it is preferable that the control unit 32 (function unit) to be housed in the housing space 4a includes a function of a branch switch that switches power supply to the branch circuit that is connected to the control unit 32. That is, it is preferable that the first function unit includes a function of switching power supply to the branch circuit that is connected to the first function unit.

Accordingly, even in a case where the function unit is housed in the housing space 4a for the branch switch, the number of circuits of the branch switch can be prevented from becoming insufficient.

Incidentally, the power meter 200 described above includes a current detection function of detecting a value of working current, a limiter function, and a reporting function. The limiter function is a function of cutting off power supply to the customer's facility side when the value of working current exceeds a predetermined current limit value. The reporting function is a function of transmitting the current power consumption and a power limit value to the communication unit 31 when the value of working current exceeds a predetermined current threshold value that is lower than the current limit value. The power limit value is the value of electric power at which the limiter function is activated. Since an operation to restore the power supply can only be performed by the electric power provider and a resident in the dwelling unit 1 cannot restore the power supply arbitrarily in a case where the power supply is cut off by the limiter function of the power meter 200, it is preferable that the limiter function is not activated if possible.

As described above, the power meter 200 transmits the current power consumption and the power limit value to the communication unit 31 when the value of working current exceeds the current threshold value, and the communication unit 31 outputs the information (current power consumption and power limit value) received from the power meter 200 to the control unit 32.

Accordingly, the control unit 32 can judge, from the current power consumption and the power limit value, the margin that exists in power consumption until the power limit value is reached, and can suppress the power consumption of the electric apparatus by controlling the electric apparatus having a wireless communication function before the power consumption reaches the power limit value. The power consumption (that is, value of working current) for the dwelling unit 1 in total can thereby be suppressed such that the limiter function of the power meter 200 is not activated.

Note that when the communication unit 31 receives the current power consumption and the power limit value transmitted from the power meter 200, the communication unit 31 may cut off the power supply to an electric apparatus that is connected to a predetermined branch circuit of the branch circuits by controlling the relay unit 35, instead of transmitting this information to the control unit 32. Accordingly, when the value of working current for the dwelling unit 1 in total exceeds the current threshold value, the communication unit 31 can cut off the power supply to the electric apparatus connected to the predetermined branch circuit of the branch circuits by controlling the relay unit 35. The power consumption (that is, value of working current) for the dwelling unit 1 in total can thereby be suppressed such that the limiter function of the power meter 200 is not activated.

Also, when the communication unit 31 receives the current power consumption and the power limit value transmitted from the power meter 200, the communication unit 31 may open the trunk switch 20, instead of transmitting this information to the control unit 32. Accordingly, when the total value of working current in the dwelling unit 1 exceeds the current threshold value, the power consumption (that is, value of working current) can be suppressed such that the limiter function of the power meter 200 is not activated as a result of the communication unit 31 opening the trunk switch 20. When the trunk switch 20 is opened, although the power supply to all the electric apparatuses in the dwelling unit 1 is cut off, the task of restoring the power supply can be easily performed compared with the case where the limiter function of the power meter 200 is activated, since the user can perform the restoration operation of the trunk switch 20.

Incidentally, as shown in FIG. 1, the current detection unit 34 that detects the value of working current in total is housed as a function unit in the distribution board 2, and the communication unit 31 may perform the above operations to suppress the power consumption based on the value of working current that is inputted from the current detection unit 34.

That is to say, the communication unit 31 outputs the current power consumption, which is obtained from the value of working current, and the power limit value to the control unit 32, when the value of working current inputted from the current detection unit 34 exceeds the predetermined current threshold value, which is lower than the current limit value at which the limiter function included in the power meter 200 is activated. The control unit 32, upon receiving information regarding the current power consumption and the power limit value from the communication unit 31, can judge the margin that exists in power consumption until the power limit value is reached, based on this information (current power consumption and power limit value). The control unit 32 suppresses the power consumption by controlling an electric apparatus having a wireless communication function before the power consumption reaches the power limit value, thus enabling the power consumption (that is, value of working current) for the dwelling unit 1 in total to be suppressed such that the limiter function of the power meter 200 is not activated.

Also, when the control unit 32 receives input of the current power consumption and the power limit value from the communication unit 31 at the time when the value of working current exceeds the current threshold value described above, the control unit 32 may report to a predetermined communication terminal connected to a public network that the value of working current (power consumption) has exceeded the current threshold value (power threshold value). Such a communication terminal includes a mobile phone such as a smartphone or a personal digital assistant such as a tablet terminal. Note that since the voltage of the commercial power supply system is approximately constant, the power threshold value can be obtained by multiplying the current threshold value by the voltage.

A communication terminal serving as a transmission partner is possessed by an electric power customer (resident) who uses the dwelling unit 1, and the resident, when away from home, can be notified that power consumption is approaching the power limit value. Here, a usage mode is conceivable in which, in a case where the resident can access the control unit 32 via a public network when away from home and control electric apparatuses in the dwelling unit 1 by operating the communication terminal, the resident performs control from the place where the resident is now before returning home to adjust the room temperature to an appropriate temperature by operating an air-conditioner, for example. In a case where the resident cannot check the power consumption of the dwelling unit 1 when away from home, it is possible that the power consumption exceeds the power limit value due to an electric apparatus being operated by the resident when away from home without the resident being aware that the power consumption is approaching the power limit value. In contrast, if the control unit 32 reports to the communication terminal connected to the public network that the value of working current has exceeded a predetermined current threshold value when the value of working current exceeds the above current threshold value, the resident can be notified that the power consumption is approaching the power limit value while away from home. Accordingly, the power consumption can be prevented from exceeding the power limit value due to the resident operating an electric apparatus in the dwelling unit 1 when away from home without knowing that the power consumption is approaching the power limit value.

Note that, when the value of working current received from the current detection unit 34 exceeds the above current threshold value, the communication unit 31 may control the relay unit 35 so as to cut off the power supply to an electric apparatus connected to a predetermined branch circuit of the branch circuits. Accordingly, when the value of working current for the dwelling unit 1 in total exceeds the current threshold value, the communication unit 31 can control the relay unit 35 so as to cut off the power supply to the electric apparatus connected to the predetermined branch circuit of the branch circuits. Accordingly, the power consumption (that is, value of working current) for the dwelling unit 1 in total can be suppressed so that the limiter function of the power meter 200 does not operate.

Also, when the value of working current inputted from the current detection unit 34 exceeds the above current threshold value, the communication unit 31 may open the trunk switch 20. Accordingly, when the value of working current for the dwelling unit 1 in total exceeds the current threshold value, the communication unit 31 opens the trunk switch 20, and as a result the power consumption (that is, value of working current) for the dwelling unit 1 in total can be suppressed so that the limiter function of the power meter 200 is not operated. Although the power supply to all the electric apparatuses in the dwelling unit 1 is cut off when the trunk switch 20 is opened, the task of restoring the power supply can be easily performed compared with the case where the limiter function of the power meter 200 is activated, since the user can perform the task of restoring the trunk switch 20.

Incidentally, although the communication unit 31 and the control unit 32 are provided separately in the embodiment described above, the communication unit 31 may be provided with the function of the control unit 32 that controls the apparatus. That is, the communication unit 31 includes a function of controlling the apparatus. The number of components can thereby be reduced. Also, since the communication line between the communication unit 31 and the control unit 32 becomes unnecessary by uniting the communication unit 31 and the control unit 32, a space for housing the communication line need not be provided inside the housing box (distribution board body 3), and as a result the housing box can be downsized.

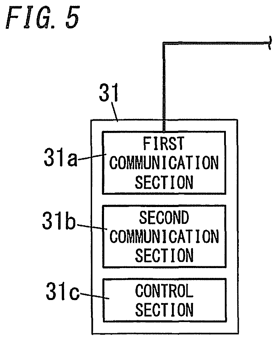

Also, in the embodiment described above, the communication unit 31 may be provided with the functions of a first communication section 31a, a second communication section 31b, and a control section 31c that controls the apparatus, as shown in FIG. 5. The first communication section 31a is a communication section that performs power line communication with the power meter 200, and the second communication section 31b is a communication section that performs wireless communication with a terminal apparatus that conforms to a wireless LAN standard. In a case where the resident in the dwelling unit 1 has a terminal apparatus that conforms to the wireless LAN standard (such as a smartphone or a personal digital assistant that has a wireless communication function conforming to the wireless LAN standard), the resident can acquire various kinds of information from the power meter 200 via the communication unit 31 using this terminal apparatus. Accordingly, the resident in the dwelling unit 1 can acquire information regarding power consumption, a power meter value, a demand response notification, or the like from the power meter 200 via the communication unit 31 by accessing the communication unit 31 using the mobile terminal that the resident already possesses without purchasing a specific apparatus for communicating with the communication unit 31.

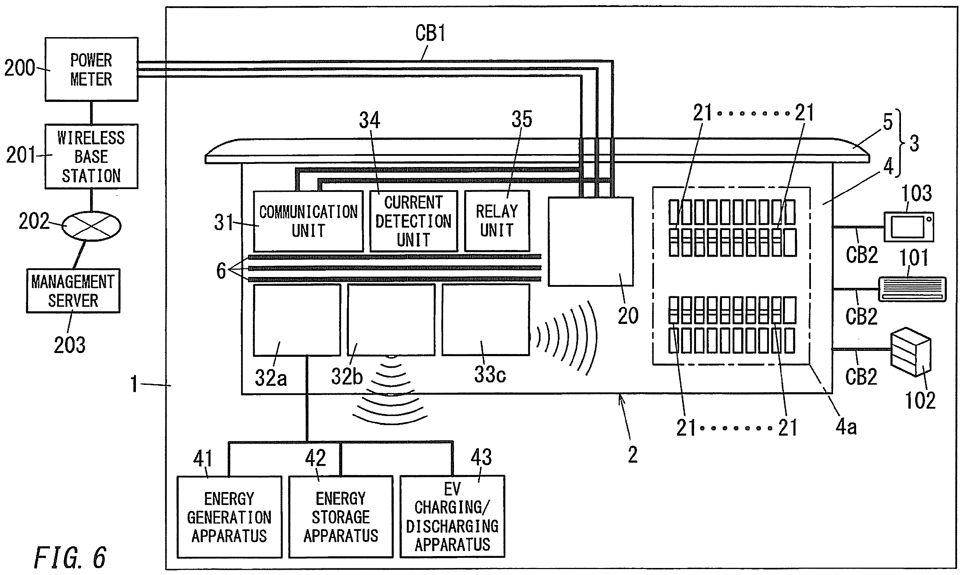

Also, although only one control unit 32 is provided in the embodiment described above, the distribution board system may include three types of control units 32a, 32b, and 32c, as shown in FIG. 6. Each of the control units 32a, 32b, and 32c includes a wireless communication section (not shown) that transmits a control signal to an apparatus. The wireless communication systems of the wireless communication sections in the control units 32a, 32b, and 32c are different from each other. For example, the control unit 32a includes a wireless communication section using a specific small power radio system, the control unit 32b includes a wireless communication section using a wireless LAN standard, and the control unit 32c includes a wireless communication section using the Bluetooth (registered trademark) system. Three types of control units 32a, 32b, and 32c using different communication systems can be connected to the communication unit 31, and information is exchanged between the communication unit 31 and the control units 32a, 32b, and 32c. Although the wireless communication system of an electric apparatus having a wireless communication function may be different due to different manufacturers or the like, the electric apparatus can be controlled by the control unit using the same wireless communication system as the electric apparatus, since control units 32a, 32b, and 32c for two or more types of wireless communication systems are included. Accordingly, the types of electric apparatuses that can be controlled by the present system can be increased.

Also, in the embodiment described above, when the control unit 32 receives the current power consumption and the power limit value via the communication unit 31, the control unit 32 may wirelessly transmit the available power value to an outlet having a wireless communication function, and may cause the outlet to display an indication of the usable power value.

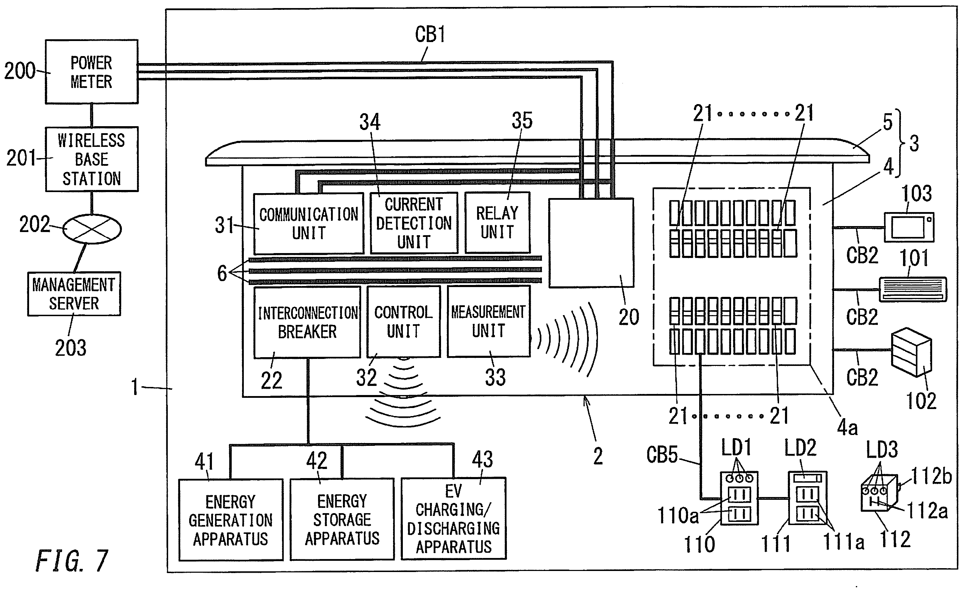

FIG. 7 is an overall system configuration diagram, and outlets 110 and 111 having a wireless communication function are connected to a branch circuit CB5. The outlets 110 and 111 are controlled by the control unit 32. The outlets 110 and 111 are wall embedded outlets, two plug connection ports 110a are provided in a front face of the outlet 100, and two plug connection ports 111a are provided in a front face of the outlet 110. In the outlet 110, a display part constituted by three light-emitting diodes LD1 is arranged on an upper side of the plug connection ports 110a. Also, in the outlet 111, a display part constituted by a light-emitting diode LD2 capable of bar display is arranged on an upper side of the plug connection ports 111a. Also, a communication section that performs wireless communication with the control unit 32 and a lighting control section that controls the lighting status of the light-emitting diodes LD1 are housed inside the outlet 110, and a communication section that performs wireless communication with the control unit 32 and a lighting control section that controls the lighting status of the light-emitting diode LD2 are housed inside the outlet 111. Note that the communication sections of the outlets 110 and 111 may be communication sections that communicate with the control unit 32 by the power line communication system.

The communication unit 31 acquires the power limit value at which the limiter function is activated and the current power consumption by performing power line communication with the power meter 200, and outputs the acquired power limit value and current power consumption to the control unit 32. The control unit 32 determines a usable power value based on the power limit value and the current power consumption that are inputted from the communication unit 31, and wirelessly transmits the determined usable power value to the outlets 110 and 111. The outlets 110 and 111, upon receiving the usable power value data from the control unit 32, changes the display on the light-emitting diodes LD1 and LD2, and displays an indication of the usable power value. In the outlet 110, the amount of the available power is displayed by the number of light-emitting diodes LD1 that are lighted, for example. Also, in the outlet 111, the magnitude of the usable power is displayed by the length of the bar display in the light-emitting diode LD2, for example. As described above, since the outlets 110 and 111 display the indication of the usable power value using the light-emitting diodes LD1 and LD2, how much power is available can be notified to the user by this display.

Incidentally, in a case where the outlet is not provided with a wireless communication function, the indication of the usable power value may be displayed on an adapter 112 that is connected to the outlet (refer to FIG. 7). The adapter 112 includes a plug connection port 112a in a front face of a box-like container, and a blade receiving member (not shown) that receives a plug blade of a plug that is connected to the plug connection port 112a is housed inside the container. Also, a plug blade 112b is provided in a back face of the container, electric power is supplied to the blade receiving member by connecting the plug blade 112b through insertion into the plug connection port of the outlet, and power is supplied to an electric apparatus that is connected to the adapter 112. Also, a light emitting part constituted by three light-emitting diodes LD3 are provided on an upper side of the plug connection port 112a in the front face of the container, and a communication section that performs wireless communication with the control unit 32 and a lighting control section that controls the lighting status of the light-emitting diodes LD3 are housed inside the container. Note that the communication section of the adapter 112 may be a communication section that communicates with the control unit 32 by the power line communication system.

Here, when the control unit 32 transmits the usable power value data wirelessly to the adapter 112, the adapter 112 changes the display of the light-emitting diodes LD3 according to the magnitude of the usable power value, and displays an indication of the usable power value. The adapter 112 displays the magnitude of the usable power by the number of light-emitting diodes LD3 that are lighted. As described above, since the adapter 112 displays the indication of the usable power value using the light-emitting diode LD3, the degree of the usable power can be notified to the user by this display.

Also, although in the above embodiment, the indication of the usable power value is displayed in the outlets 110 and 111, power may be supplied to an electric apparatus from the outlet if the power consumption of the electric apparatus connected to the outlet is less than or equal to the usable power.

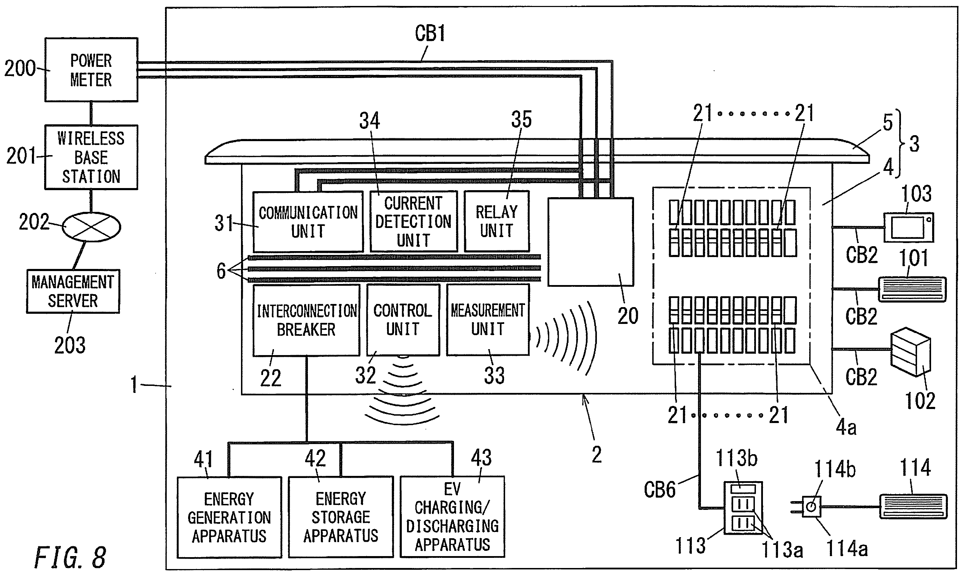

FIG. 8 is an overall system configuration diagram, and an outlet 113 having a wireless communication function is connected to a branch circuit CB6. The outlet 113 is controlled by the control unit 32.

A RFID tag 114b that stores information designating the power consumption of an air-conditioner 114 is embedded in a plug 114a of the air-conditioner 114 to be connected to the outlet 113.

The outlet 113 is a wall embedded outlet, and two plug connection ports 113a are provided in a front face thereof, and a RFID reader (information acquiring section) 113b is arranged on an upper side of the plug connection ports 113a. The RFID reader 113b is an information acquiring section that acquires information on the power consumption of an apparatus (the air-conditioner 114 in an example shown in the diagram) from the apparatus. Also, a communication section that performs wireless communication with the control unit 32 and a power supply control section (communication section) that controls power supply (power supply status) to an electric apparatus that is connected to the plug connection port 113a are housed inside the outlet 113. The power supply control section controls power supply to an electric apparatus that is connected to the plug connection port 113a based on the information that the communication section has received from the control unit 32, and the information on the power consumption that the RFID reader 113b has read out. Note that the communication section may be a communication section that communicates with the control unit 32a by the power line communication system.

Here, the control unit 32 determines a usable power value based on the current power consumption and the power limit value that the communication unit 31 has received from the power meter 200, and transmits the usable power value data wirelessly to the outlet 113. The power supply control section of the outlet 113 compares the information on the power consumption that the RFID reader 113b has read out from the RFID tag 114b of the air-conditioner 114 with the information on the usable power value that the communication section has received from the control unit 32. Then, the power supply control section of the outlet 113 does not supply electric power to the air-conditioner 114 if the power consumption of the air-conditioner 114 is larger than the usable power value.

As described above, if the power consumption of the electric apparatus is larger than the usable power value, power is not supplied from the outlet 113 to the electric apparatus. Accordingly, even if the resident of the dwelling unit 1 is not aware of the current power consumption and the power limit value, the outlet 113 can itself cut off the power supply such that the power consumption does not exceed the power limit value. Note that the outlet 113 is in a state in which power is not supplied from the plug connection port 113a, when the plug of an electric apparatus is not connected to the plug connection port 113a, and the power consumption is not determined to be less than or equal to the usable power.

Also, in the embodiments described above, the communication unit 31 performs communication with the power meter 200 by the power line communication system. Since the wiring length between the power meter 200 and the distribution board 2 is short, and the transmission attenuation amount between the power meter 200 and the distribution board 2 is small, the power line communication can be reliably performed between the communication unit 31 installed in the distribution board 2 and the power meter 200. Accordingly, the communication unit 31 can reliably receive information (a meter value of an electric power amount, and a demand response from an electric power provider, for example) from the power meter 200, and can reliably output the information from the power meter 200 to the control unit 32. Also, although in a case where the communication unit 31 is connected to an outlet inside the dwelling unit 1, for example, a communication failure may possibly occur due to an error by the user such as disconnecting power or rearranging the apparatuses, the communication unit 31 can reliably communicate with the power meter 200, since the communication unit 31 is arranged inside the distribution board 2.

Also, since the communication unit 31 installed inside the dwelling unit 1 can communicate with the power meter 200, in a case where the communication unit 31 is a facility of an electric power provider, there is an advantage in that various settings and maintenance of the communication unit 31 can be performed without a service person entering the dwelling unit 1, since the electric power provider can access the communication unit 31 via the power meter 200 from the management server 203. That is, an operation setting is performed on the communication unit 31 according to the operation setting information received from the power meter 200.

## Claims

1. A distribution board system, comprising:
a distribution board (2) configured to distribute electric power supplied from an electric power provider to branch circuits, and supply electric power to apparatuses connected to the branch circuits, wherein the distribution board comprises:
one housing box configured to house two or more types of internal units including a trunk switch (20) to which a trunk wiring (CB1) from the electric power provider is to be connected, and branch switches (21) to which the branch circuits are to be connected, the housing box further comprising:
a communication unit (31) configured to communicate with a power meter (200) having a communication function, and
a function unit being configured to perform control regarding power supply to one of the apparatuses based on a communication content with the power meter (200),
a power supply unit configured to supply electric power corresponding to an input power supply specification of the function unit to the function unit, and
a measurement unit (33) configured to measure power consumption in each of the branch circuits,
wherein the distribution board system comprises, as the function unit, a control unit (32) configured to control the apparatus based on a measurement result by the measurement unit (33).

2. The distribution board system according to claim 1, wherein the communication unit (31) and the function unit each comprise a mounting mechanism for detachably mounting the unit to a mounting portion.

3. The distribution board system according to claim 1 or 2,
wherein a housing space (4a) for housing the branch switches (21) is secured inside the one housing box, and
wherein the function unit is housed inside the one housing box using the housing space (4a).

4. The distribution board system according to any one of claims 1 to 3,
wherein a wiring member that constitutes a communication path between the communication unit (31) and the function unit is installed inside the one housing box,
wherein the communication unit (31) and the function unit each comprise a communication section configured to perform communication between the communication unit (31) and the function unit, and a connection terminal for electrically connecting the communication section to the wiring member, and wherein the connection terminal is electrically connected to the wiring member.

5. The distribution board system according to any one of claims 1 to 4, comprising, as the function unit, the measurement unit (33) and the control unit (32), wherein the measurement unit (33) and the control unit (32) are configured to communicate via a wired communication line.

6. The distribution board system according to any one of claims 1 to 5, wherein the one housing box comprises a distribution board body (3) and an expansion board (7) provided side by side with the distribution board body (3), and a housing space (4a) for housing the branch switches (21) is secured inside the distribution board body (3),
wherein at least one function unit of function units is housed in the distribution board body (3), and the communication unit (31) and a remaining function unit are housed in the expansion board (7),
wherein the communication unit (31) and the at least one function unit housed in the distribution board body (3) are configured to communicate via a wired communication line, and
wherein the function unit to be housed in the distribution board body (3) is housed inside the distribution board body (3) using the housing space (4a) provided inside the distribution board body (3).

7. The distribution board system according to any one of claims 1 to 5,
wherein the one housing box comprises:
a box body (4) having an opening in a front surface; and
a lid body (5) configured to openably/closably cover the opening, and a housing space (4a) for housing the branch switches (21) is secured inside the box body (4),
wherein the communication unit (31) is installed in the lid body (5), and at least one function unit of function units is housed in the box body (4),
wherein the communication unit (31) and the at least one function unit housed in the box body (4) are configured to communicate via a wired communication line, and
wherein the at least one function unit to be housed in the box body (4) is housed inside the box body (4) using the housing space (4a) provided inside the box body (4).

8. The distribution board system according to claim 6 or 7, wherein the at least one function unit to be housed in the housing space (4a) comprises a function of a branch switch (21) configured to turn on/off power supply to a branch circuit connected to the function unit.

9. The distribution board system according to any one of claims 1 to 8, wherein the communication unit (31) comprises a function of the control unit (32).

10. The distribution board system according to claim 9, wherein the communication unit (31) comprises:
a first communication section (31a) configured to perform power line communication with the power meter (200);
a second communication section (31b) configured to perform wireless communication with a terminal apparatus conforming to a wireless LAN standard; and
wherein the communication unit (31) is configured to wirelessly transmit information received from the power meter (200) by the first communication section (31a) to the terminal apparatus from the second communication section (31b).

11. The distribution board system according to any one of claims 1 to 10, wherein the control unit (32) is connected to the communication unit (31) and is configured to control the apparatus based on information inputted from the communication unit (31),
wherein the control unit (32) comprises a wireless communication section configured to wirelessly transmit a control signal to the apparatus in order to perform such a control, and
wherein two or more types of control units using different wireless communication systems are connectable to the communication unit (31).

## Patentansprüche

1. Verteilersystem, aufweisend:
eine Verteilerplatine (2), die konfiguriert ist, um elektrischen Strom, der von einem Stromversorger geliefert wird, auf Abzweigschaltungen zu verteilen und um Vorrichtungen, die mit den Abzweigschaltungen verbunden sind, elektrischen Strom zu liefern, wobei die Verteilerplatine aufweist:
einen Gehäusekasten, der konfiguriert ist, um zwei oder mehr Arten von internen Einheiten aufzunehmen, die einen Hauptschalter (20) aufweisen, der mit einer Hauptverdrahtung (CB1) von dem Stromversorger zu verbinden ist,
und Abzweigschalter (21), mit denen die Abzweigschaltungen zu verbinden sind, wobei der Gehäusekasten ferner aufweist:
eine Kommunikationseinheit (31), die konfiguriert ist, um mit einem Stromzähler (200) zu kommunizieren, der eine Kommunikationsfunktion hat, und
eine Funktionseinheit, die konfiguriert ist, um eine Steuerung bezüglich der Stromversorgung einer der Vorrichtungen auf der Grundlage eines Kommunikationsinhalts mit dem Stromzähler (200) durchzuführen,
eine Stromversorgungseinheit, die konfiguriert ist, um der Funktionseinheit entsprechend einer Eingangsstromversorgungsspezifikation der Funktionseinheit elektrischen Strom zu liefern, und
eine Messeinheit (33), die konfiguriert ist, um einen Stromverbrauch in jedem der Abzweigschaltungen zu messen,
wobei das Verteilersystem als Funktionseinheit eine Steuereinheit (32) aufweist, die konfiguriert ist, um die Vorrichtung auf der Grundlage eines Messergebnisses der Messeinheit (33) zu steuern.

2. Verteilersystem nach Anspruch 1, wobei die Kommunikationseinheit (31) und die Funktionseinheit jeweils einen Befestigungsmechanismus zur abnehmbaren Befestigung der Einheit an einem Befestigungsabschnitt aufweisen.

3. Verteilersystem nach Anspruch 1 oder 2,
wobei im Innern des einen Gehäusekastens ein Gehäuseraum (4a) zur Aufnahme der Abzweigschalter (21) befestigt ist, und
wobei die Funktionseinheit im Innern des einen Gehäusekastens unter Verwendung des Gehäuseraums (4a) aufgenommen ist.

4. Verteilersystem nach einem der Ansprüche 1 bis 3,
wobei im Innern des einen Gehäusekastens ein Verdrahtungselement, das einen Kommunikationspfad zwischen der Kommunikationseinheit (31) und der Funktionseinheit bildet, installiert ist,
wobei die Kommunikationseinheit (31) und die Funktionseinheit jeweils einen Kommunikationsabschnitt, der konfiguriert ist, um eine Kommunikation zwischen der Kommunikationseinheit (31) und der Funktionseinheit durchzuführen, und einen Verbindungsanschluss zum elektrischen Verbinden des Kommunikationsabschnitts mit dem Verdrahtungselement aufweist, und
wobei der Verbindungsanschluss mit dem Verdrahtungselement elektrisch verbunden ist.

5. Verteilersystem nach einem der Ansprüche 1 bis 4, die Messeinheit (33) und die Steuereinheit (32) als Funktionseinheit aufweisend,
wobei die Messeinheit (33) und die Steuereinheit (32) konfiguriert sind, um über eine verdrahtete Kommunikationsleitung zu kommunizieren.

6. Verteilersystem nach einem der Ansprüche 1 bis 5,
wobei der eine Gehäusekasten aufweist:
einen Verteilerplatinenkörper (3) und eine Erweiterungsplatine (7), die Seite an Seite mit dem Verteilerplatinenkörper (3) vorgesehen ist, und
ein Gehäuseraum (4a) zur Aufnahme der Abzweigschalter (21) ist im Innern des Verteilerplatinenkörpers (3) befestigt.
wobei mindestens eine der Funktionseinheiten von den Funktionseinheiten in dem Verteilerplatinenkörper (3) aufgenommen ist, und die Kommunikationseinheit (31) und eine verbleibende Funktionseinheit in der Erweiterungsplatine (7) aufgenommen sind,
wobei die Kommunikationseinheit (31) und die mindestens eine Funktionseinheit, die in dem Verteilerplatinenkörper (3) aufgenommen ist, konfiguriert sind, um über eine verdrahtete Kommunikationsleitung zu kommunizieren, und
wobei die Funktionseinheit, die in dem Verteilerplatinenkörper (3) aufzunehmen ist, im Innern des Verteilerplatinenkörpers (3) unter Verwendung des Gehäuseraums (4a) aufgenommen ist, der im Innern des Verteilerplatinenkörpers (3) vorgesehen ist.

7. Verteilersystem nach einem der Ansprüche 1 bis 5,
wobei der eine Gehäusekasten aufweist:
einen Kastenkörper (4) mit einer Öffnung in einer Vorderfläche; und
einen Deckelkörper (5), der konfiguriert ist, um die Öffnung öffenbar/verschließbar abzudecken, und ein Gehäuseraum (4a) zur Aufnahme der Abzweigschalter (21) ist im Innern des Kastenkörpers (4) befestigt,
wobei die Kommunikationseinheit (31) in dem Deckelkörper (5) installiert ist, und mindestens eine Funktionseinheit von Funktionseinheiten in dem Kastenkörper (4) aufgenommen ist,
wobei die Kommunikationseinheit (31) und die mindestens eine Funktionseinheit, die in dem Kastenkörper (4) aufgenommen ist, konfiguriert sind, um über eine verdrahtete Kommunikationsleitung zu kommunizieren, und
wobei die mindestens eine Funktionseinheit, die in dem Kastenkörper (4) aufzunehmen ist, im Innern des Kastenkörpers (4) unter Verwendung des Gehäuseraums (4a) aufgenommen ist, der im Innern des Kastenkörpers (4) vorgesehen ist.

8. Verteilersystem nach Anspruch 6 oder 7, wobei die mindestens eine Funktionseinheit, die in dem Gehäuseraum (4a) aufzunehmen ist, eine Funktion eines Abzweigschalters (21) aufweist, der konfiguriert ist, um die Stromversorgung einer Abzweigschaltung, die mit der Funktionseinheit verbunden ist, ein- und auszuschalten.

9. Verteilersystem nach einem der Ansprüche 1 bis 8, wobei die Kommunikationseinheit (31) eine Funktion der Steuereinheit (32) umfasst.

10. Verteilersystem nach Anspruch 9,
wobei die Kommunikationseinheit (31) aufweist:
einen ersten Kommunikationsabschnitt (31a), der konfiguriert ist, um eine Netzleitungskommunikation mit dem Stromzähler (200) durchzuführen;
einen zweiten Kommunikationsabschnitt (31b), der konfiguriert ist, um mit einer Endvorrichtung, die einem drahtlosen LAN-Standard entspricht, eine drahtlose Kommunikation durchzuführen; und
wobei die Kommunikationseinheit (31) konfiguriert ist, um Informationen, die von dem Stromzähler (200) durch den ersten Kommunikationsabschnitt (31a) empfangen wurden, drahtlos von dem zweiten Kommunikationsabschnitt (31b) an die Endvorrichtung zu senden.

11. Verteilersystem nach einem der Ansprüche 1 bis 10, wobei die Steuereinheit (32) mit der Kommunikationseinheit (31) verbunden ist und konfiguriert ist, um die Vorrichtung auf der Grundlage von Informationen zu steuern, die von der Kommunikationseinheit (31) her eingegeben sind,
wobei die Steuereinheit (32) einen drahtlosen Kommunikationsabschnitt aufweist, der konfiguriert ist, um drahtlos ein Steuersignal an die Vorrichtung zu senden, um eine solche Steuerung durchzuführen, und
wobei sich zwei oder mehr Arten von Steuereinheiten, die unterschiedliche drahtlose Kommunikationssysteme verwenden, mit der Kommunikationseinheit (31) verbinden lassen.

## Revendications

1. Système de tableau de distribution, comprenant :
un tableau de distribution (2) configuré de manière à distribuer de l'énergie électrique fournie depuis un fournisseur d'énergie électrique à des circuits de dérivation, et à fournir de l'énergie électrique à des appareils connectés aux circuits de dérivation, dans lequel le tableau de distribution comprend :
un boîtier de logement configuré de manière à loger deux types ou plus d'unités internes incluant un commutateur de circuits (20) auquel un câblage de liaison (CB1) provenant du fournisseur d'énergie électrique doit être connecté, et des commutateurs de dérivation (21) auxquels les circuits de dérivation doivent être connectés, le boîtier de logement comprenant en outre :
une unité de communication (31) configurée de manière à communiquer avec un compteur électrique (200) présentant une fonction de communication ; et
une unité de fonction configurée de manière à mettre en oeuvre une commande concernant l'alimentation électrique de l'un des appareils, sur la base d'un contenu de communication avec le compteur électrique (200) ;
un bloc d'alimentation configuré de manière à fournir de l'énergie électrique correspondant à une spécification d'alimentation électrique d'entrée de l'unité de fonction, à l'unité de fonction ; et
une unité de mesure (33) configurée de manière à mesurer une consommation d'énergie dans chacun des circuits de dérivation ;
dans lequel le système de tableau de distribution comprend, en tant que l'unité de fonction, une unité de commande (32) configurée de manière à commander l'appareil sur la base d'un résultat de mesure provenant de l'unité de mesure (33).

2. Système de tableau de distribution selon la revendication 1, dans lequel l'unité de communication (31) et l'unité de fonction comprennent chacune un mécanisme de montage pour monter de manière détachable l'unité sur une partie de montage.

3. Système de tableau de distribution selon la revendication 1 ou 2,
dans lequel un espace de logement (4a) destiné à loger les commutateurs de dérivation (21) est fixé à l'intérieur du boîtier de logement ; et
dans lequel l'unité de fonction est logée à l'intérieur dudit boîtier de logement en utilisant l'espace de logement (4a).

4. Système de tableau de distribution selon l'une quelconque des revendications 1 à 3,
dans lequel un élément de câblage qui constitue un chemin de communication entre l'unité de communication (31) et l'unité de fonction est installé à l'intérieur dudit boîtier de logement ;
dans lequel l'unité de communication (31) et l'unité de fonction comprennent chacune une section de communication configurée de manière à mettre en oeuvre une communication entre l'unité de communication (31) et l'unité de fonction, et une borne de connexion pour connecter électriquement la section de communication à l'élément de câblage, et dans lequel la borne de connexion est connectée électriquement à l'élément de câblage.

5. Système de tableau de distribution selon l'une quelconque des revendications 1 à 4, comprenant, en tant que l'unité de fonction, l'unité de mesure (33) et l'unité de commande (32), dans lequel l'unité de mesure (33) et l'unité de commande (32) sont configurées de manière à communiquer par l'intermédiaire d'une ligne de communication filaire.

6. Système de tableau de distribution selon l'une quelconque des revendications 1 à 5,
dans lequel le boîtier de logement comprend un corps de tableau de distribution (3) et une carte d'extension (7) fournie côte à côte avec le corps de tableau de distribution (3), et dans lequel un espace de logement (4a) pour loger les commutateurs de dérivation (21) est fixé à l'intérieur du corps de tableau de distribution (3) ;
dans lequel au moins une unité de fonction parmi les unités de fonction est logée dans le corps de tableau de distribution (3), et l'unité de communication (31) et une unité de fonction restante sont logées dans la carte d'extension (7) ;
dans lequel l'unité de communication (31) et ladite au moins une unité de fonction logée dans le corps de tableau de distribution (3) sont configurées de manière à communiquer par l'intermédiaire d'une ligne de communication filaire ; et
dans lequel l'unité de fonction devant être logée dans le corps de tableau de distribution (3) est logée à l'intérieur du corps de tableau de distribution (3) en utilisant l'espace de logement (4a) fourni à l'intérieur du corps de tableau de distribution (3).

7. Système de tableau de distribution selon l'une quelconque des revendications 1 à 5, dans lequel le boîtier de logement comprend :
un corps de boîtier (4) présentant une ouverture dans une surface avant ; et
un corps de couvercle (5) configuré de manière à couvrir, de façon ouvrable/fermable, l'ouverture, et dans lequel un espace de logement (4a) pour loger les commutateurs de dérivation (21) est fixé à l'intérieur du corps de boîtier (4) ;
dans lequel l'unité de communication (31) est installée dans le corps de couvercle (5), et
au moins une unité de fonction parmi les unités de fonction est logée dans le corps de boîtier (4) ;
dans lequel l'unité de communication (31) et ladite au moins une unité de fonction logée dans le corps de boîtier (4) sont configurées de manière à communiquer par l'intermédiaire d'une ligne de communication filaire ; et
dans lequel ladite au moins une unité de fonction devant être logée dans le corps de boîtier (4) est logée à l'intérieur du corps de boîtier (4) en utilisant l'espace de logement (4a) fourni à l'intérieur du corps de boîtier (4).

8. Système de tableau de distribution selon la revendication 6 ou 7, dans lequel ladite au moins une unité de fonction devant être logée dans l'espace de logement (4a) comprend une fonction d'un commutateur de dérivation (21) configuré de manière à activer/désactiver l'alimentation électrique d'un circuit de dérivation connecté à l'unité de fonction.

9. Système de tableau de distribution selon l'une quelconque des revendications 1 à 8, dans lequel l'unité de communication (31) comprend une fonction de l'unité de commande (32).

10. Système de tableau de distribution selon la revendication 9, dans lequel l'unité de communication (31) comprend :
une première section de communication (31a) configurée de manière à mettre en oeuvre une communication par courants porteurs avec le compteur électrique (200) ;
une seconde section de communication (31b) configurée de manière à mettre en oeuvre une communication sans fil avec un appareil terminal en conformité avec une norme de réseau local sans fil, LAN ; et
dans lequel l'unité de communication (31) est configurée de manière à transmettre, par voie hertzienne, des informations reçues en provenance du compteur électrique (200) par la première section de communication (31a) à l'appareil terminal, à partir de la seconde section de communication (31b).

11. Système de tableau de distribution selon l'une quelconque des revendications 1 à 10, dans lequel l'unité de commande (32) est connectée à l'unité de communication (31) et est configurée de manière à commander l'appareil sur la base d'informations appliquées en entrée à partir de l'unité de communication (31),
dans lequel l'unité de commande (32) comprend une section de communication sans fil configurée de manière à transmettre, par voie hertzienne, un signal de commande, à l'appareil, afin de mettre en oeuvre une telle commande ; et
dans lequel deux types ou plus d'unités de commande utilisant différents systèmes de communication sans fil peuvent être connectés à l'unité de communication (31).
